# DEMANDE DE BREVET EUROPEEN

(11) **EP 1 174 024 A2**
(43) Date de publication de la demande: **23.01.2002**
(21) Numéro de dépôt: 01440191.3
(22) Date de dépôt: 26.06.2001
(51) Int. Cl.: A01K 25/00

(54) **Muselière, notamment pour chien**

(30) Priorité: 26.06.2000 FR 0008129
(71) Demandeur: Perello, Jeannot, 68480 Oltingue (FR)
(72) Inventeur: Perello, Jeannot, 68480 Oltingue (FR)
(74) Mandataire: Nithardt, Roland

(57) **Abrégé**

La présente invention concerne une muselière empêchant un animal de mordre tout en lui assurant un meilleur confort de manière à inciter notamment les propriétaires de chien de l'utiliser et à garantir la sécurité de la population.

La muselière (1) comprend une armature (2) constituée de deux tubes creux assemblés en forme de Y pour épouser la morphologie de la tête du chien, et maintenue en position par une sangle (3) et des liens latéraux (3a, 3b). Elle comprend également une boucle de muselière (4) placée sous la gueule du chien et coulissant dans les tubes creux de l'armature (2) pour régler sa longueur de manière à passer d'une position d'ouverture permettant au chien de s'alimenter et haleter librement à une position de fermeture de la gueule du chien en cas de danger de morsure, ou d'aboiement excessif simplement en tirant sur les extrémités (10) de la boucle de muselière (4).

## Description

La présente invention concerne une muselière destinée notamment à un chien.

Une telle muselière est utilisée pour empêcher les chiens de mordre, en particulier les chiens considérés comme dangereux. Une nouvelle réglementation concernant les chiens appartenant à certaines races considérées comme dangereuses impose désormais le port d'une muselière pour neutraliser avec certitude l'animal, prévenir toute attaque et sécuriser la population sur la voie publique.

Les muselières traditionnelles comprennent une grille maintenue fermement sur la gueule du chien destinée à l'empêcher d'ouvrir la gueule, d'aboyer et de mordre. Cependant, de telles muselières rendent impossibles une quelconque prise d'aliments ou d'eau et une respiration libre, notamment pour haleter.

En conséquence, les propriétaires hésitent généralement à imposer à leur chien une muselière, source de grand inconfort pour le chien. De ce fait, les chiens sur la voie publique ne sont pas en règle avec la loi et la protection des autres personnes sur la voie publique n'est pas assurée.

La présente invention vise à pallier ces inconvénients en proposant une muselière empêchant l'animal de mordre ou d'aboyer tout en lui assurant un meilleur confort, de manière à inciter les propriétaires de chien à l'utiliser et à garantir la sécurité de la population.

Dans ce but, l'invention concerne une muselière du genre indiqué en préambule, caractérisée en ce qu'elle comprend une armature agencée pour épouser la morphologie de la tête du chien, des moyens de maintien passant au moins autour du cou du chien et agencés pour maintenir l'armature en position, et une boucle de muselière à tension variable et agencée de manière à être réglée dans une position comprise entre une position de fermeture de la gueule du chien en cas de danger de morsure et une position d'ouverture permettant au chien de s'alimenter, de boire et de haleter librement et de laisser pendre sa langue.

D'une manière particulièrement avantageuse, l'armature comprend deux tubes creux présentant une partie solidaire l'une à l'autre puis une partie divergente, de sorte que l'armature présente une forme de Y avec une tige et deux branches, chaque partie divergente du tube correspondant aux branches du Y étant disposée de part et d'autre du museau du chien.

De préférence, les moyens de maintien de l'armature comprennent une sangle fixée à l'extrémité libre des parties solidaires de l'armature en Y et agencée pour passer au moins autour du cou du chien ainsi que deux liens latéraux dont une extrémité est fixée à la sangle sous la gueule du chien, l'autre extrémité desdits liens latéraux étant fixée à chaque extrémité libre des parties divergentes de l'armature en Y. Avantageusement, la sangle et les liens latéraux sont réalisés d'une seule pièce et réunis par un anneau de liaison. La sangle et les liens latéraux peuvent comporter des moyens de fixation sur l'armature agencés pour permettre un réglage en longueur de ladite sangle et desdits liens.

D'une manière particulièrement avantageuse, la boucle de muselière comprend un cordon enserrant la gueule du chien et dont chaque extrémité passe dans chaque partie divergente de l'armature pour ressortir par l'extrémité libre de chaque partie solidaire de ladite armature.

Les extrémités du cordon présentent de préférence des moyens de verrouillage en position de fermeture variable agencés pour permettre un réglage variable de la tension de la boucle de muselière.

Dans une variante de réalisation, les extrémités du cordon comportent des moyens d'accrochage agencés pour être couplés à une laisse.

Ledit cordon comprend de préférence un moyen de fixation rapide à l'anneau de liaison de la sangle.

Avantageusement, l'armature peut présenter des moyens d'accrochage rapide et amovible d'un élément de décoration.

La présente invention et ses avantages apparaîtront mieux dans la description suivante d'un exemple de réalisation, en référence aux dessins annexés, dans lesquels :
- la figure 1 représente une vue en perspective de la muselière selon l'invention,
- la figure 2 est une vue de face de la tête d'un chien portant la muselière,
- la figure 3 est une vue de côté, et
- la figure 4 représente des éléments de décoration.

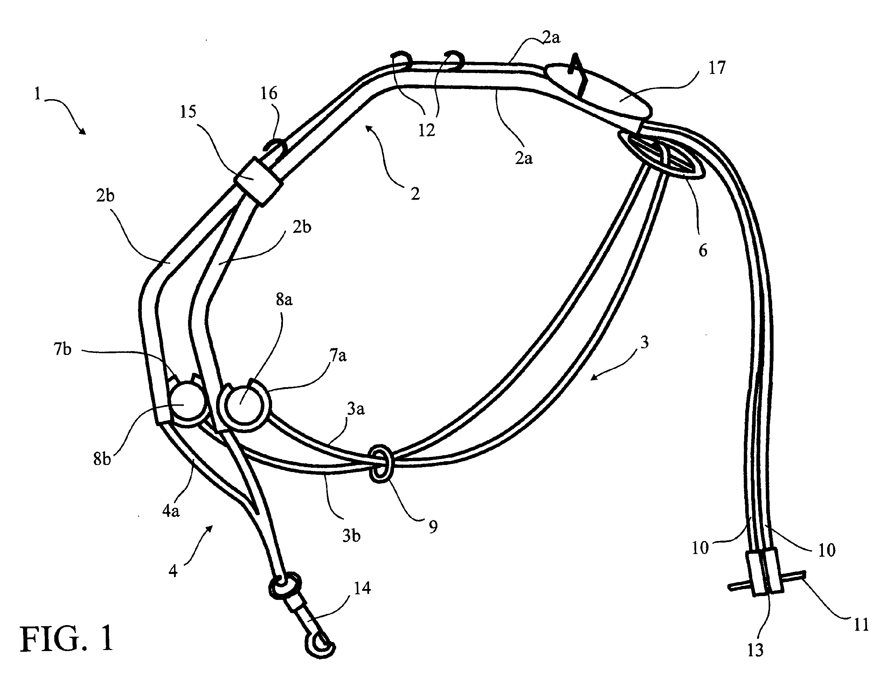

En référence aux figures 1 à 3, la muselière 1 selon l'invention comprend une armature rigide 2, des moyens de maintien de ladite armature 2 comprenant une sangle 3 et deux liens latéraux 3a, 3b et une boucle de muselière 4.

L'armature rigide 2 comprend deux tubes creux présentant chacun une partie 2a solidaire l'une à l'autre sur sensiblement les 2/3 de l'armature 2, cette longueur correspondant au front d'un chien 5, puis une partie divergente 2b de manière à former un Y, les parties 2a solidaires formant la tige du Y et chaque partie divergente 2b formant chacune des branches du Y. Les parties divergentes 2b sont destinées à être positionnées de part et d'autre du museau du chien 5. Cette armature rigide 2 peut être réalisée en métal ou en toute autre matière synthétique ou composite.

Une variante de réalisation non représentée, consiste à utiliser deux tubes creux latéraux, dont les parties arrière sont rendues solidaires par l'intermédiaire d'un tube central.

Les parties solidaires 2a et divergentes 2b présentent des courbures de manière à épouser la forme du crâne du chien. Les dimensions de l'armature sont adaptées à la morphologie du chien en fonction de sa race.

A chacune de ses extrémités libres, l'armature 2 présente des moyens de fixation de la sangle 3 et des liens latéraux 3a, 3b, à savoir un anneau fixe arrière 6 dans lequel la sangle 3 coulisse librement, et deux anneaux avant latéraux 7a, 7b. A l'extrémité des liens latéraux 3a, 3b sont prévues des boules de verrouillage 8a, 8b, ou tout autre système de verrouillage équivalent, agencées pour se bloquer dans l'anneau avant latéral 7a, 7b correspondant et pour coulisser le long de son lien 3a, 3b de manière à régler la longueur dudit lien.

Pour simplifier la réalisation, la sangle 3 et les liens latéraux 3a, 3b sont réalisés d'une seule pièce, et sont réunis par un anneau de liaison 9 monté coulissant. On peut bien sûr prévoir que les liens latéraux 3a, 3b sont indépendants de la sangle 3 à laquelle ils sont fixés par une extrémité sous la gueule du chien, l'autre extrémité étant fixée aux branches 2b comme ci-dessus.

La boucle de muselière 4 est constituée d'un cordon 4a destiné à enserrer la gueule du chien 5. A cet effet, chaque extrémité 10 du cordon 4a est enfilée dans chacune des branches 2b de l'armature 2 pour ressortir par l'extrémité libre de chaque partie solidaire 2a. Ainsi, les extrémités 10 du cordon 4a coulissent librement dans l'armature 2 de manière à pouvoir régler la tension de la boucle de muselière 4. Pour verrouiller la boucle de muselière 4 dans une position de fermeture, les extrémités 10 du cordon 4a sont reliées par une barre 11 agencée pour verrouiller sa partie centrale 13 dans des crochets 12 prévus sur la tige 2a de l'armature 2. Dans l'exemple représenté, les crochets 12 sont au nombre de deux, permettant un verrouillage de la boucle de muselière 4 dans deux positions, de manière à optimiser la tension de fermeture.

Dans une variante de réalisation non représentée, les extrémités 10 du cordon 4a comportent des moyens d'accrochage tels que par exemple un mousqueton agencé pour se fixer sur un anneau prévu sur la laisse. D'autres moyens équivalents peuvent également être prévus. La laisse est par ailleurs reliée au collier habituellement porté par le chien. Le mousqueton et/ou l'anneau sont réglables de manière à ce qu'une traction appliquée sur la laisse agisse, dans un premier temps, sur la muselière pour fermer la gueule du chien et, dans un second temps, sur le collier pour tenir le chien en place.

Le cordon 4a comprend en son centre un mousqueton 14 constituant un moyen de fixation rapide sur l'anneau de liaison 9 de la sangle 3 de manière à garder constamment la boucle de muselière 4 sous le menton du chien 5 pour éviter de la rendre inopérante.

Il est également possible de prévoir sur le cordon 4a, sous le menton du chien 5, un élément de protection (non représenté) empêchant toute irritation des tissus mous externes de la mâchoire inférieure du chien 5. De même, un élément de protection 15 est prévu sur l'armature 2, à l'intersection des parties solidaires 2a et des parties divergentes 2b.

Enfin, l'armature 2 présente, à l'intersection des parties solidaires 2a et des parties divergentes 2b un crochet 16 et à proximité des extrémités libres des parties solidaires une boucle 17 constituant avec le crochet 16 des moyens d'accrochage rapide et amovibles d'un élément de décoration 20.

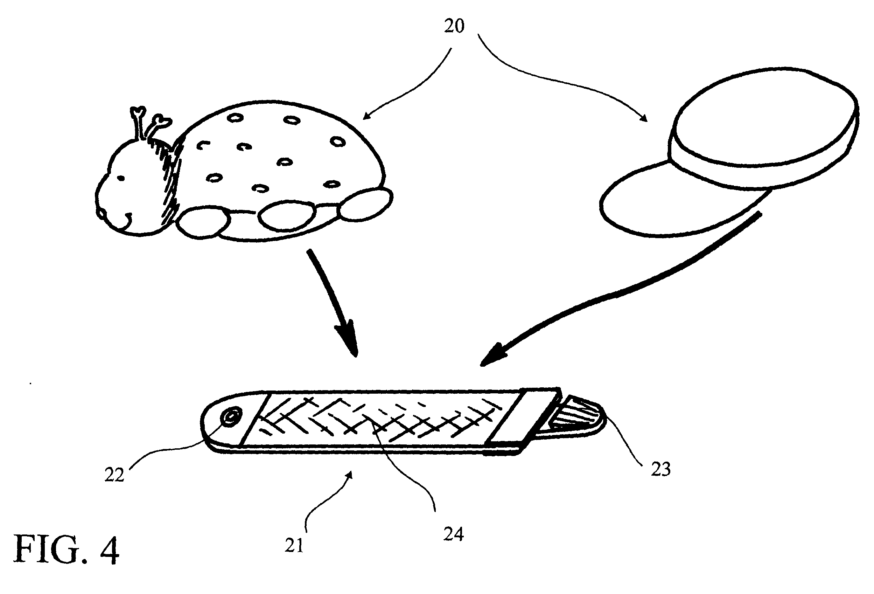

En référence à la figure 4, l'élément de décoration 20 est solidarisé sur un support 21 au moyen par exemple d'une couture ou d'une bande Velcro® 24. Ce support 21 comporte à une extrémité un orifice 22 destiné à recevoir le crochet 16 et à l'autre extrémité un fermoir 23 correspondant à la boucle 17. L'élément de décoration 20 peut être une peluche, une casquette, une fleur, etc.

La mise en place de la muselière 1 selon l'invention est particulièrement simple et rapide. L'armature 2 est disposée sur la tête du chien 5 de sorte que les parties solidaires 2a épousent le crâne du chien 5 et que les parties divergentes 2b sont disposées de part et d'autre du museau. Ensuite, l'armature est solidement maintenue sur la tête de l'animal en plaçant la sangle 3 sur la nuque derrière les oreilles, en ramenant les liens latéraux 3a, 3b et l'anneau de liaison 9 sous le menton en longeant les joues du chien puis en bloquant les extrémités des liens latéraux 3a, 3b dans les anneaux avant latéraux 7a, 7b au moyen des boules de verrouillage 8a, 8b. Ainsi, le chien 5 ne peut pas retirer facilement la muselière 1. Lesdites boules de verrouillage 8a, 8b permettent également d'ajuster la sangle 3 et les liens latéraux 3a, 3b à l'envergure de la tête de l'animal.

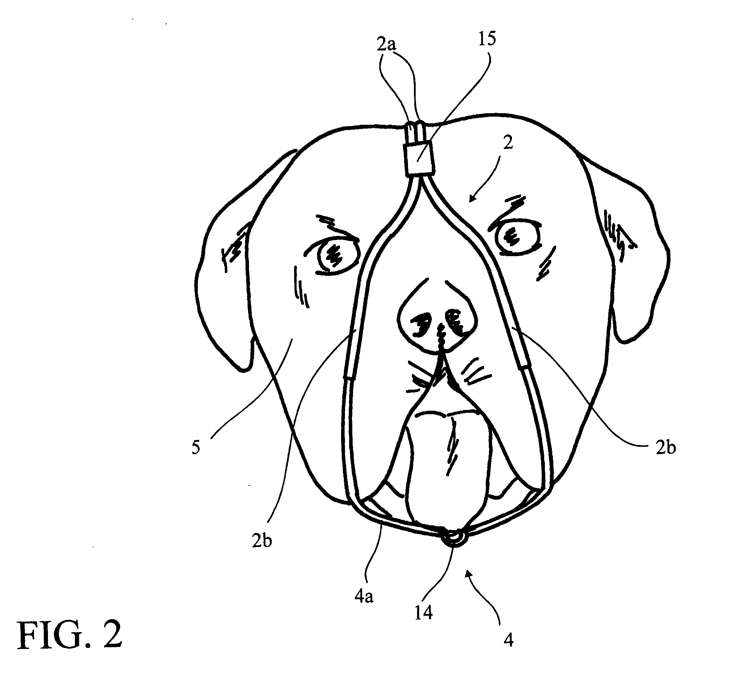

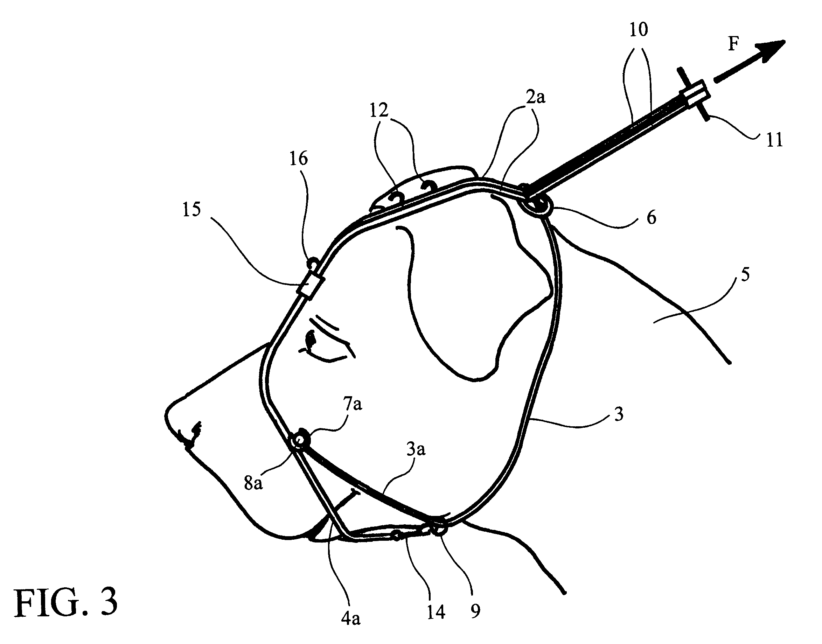

Ensuite, le cordon 4a de la boucle de muselière 4 est passé autour de la gueule du chien et fixé à l'anneau de liaison 9 par le mousqueton 14. Lorsque le cordon 4 est relâché en position d'ouverture, le chien 5 peut ouvrir la gueule pour s'alimenter, boire ou haleter (cf. Figure 2), sa langue pouvant pendre. En tirant sur les extrémités 10 du cordon selon la flèche F représentée sur la figure 3, on réduit la longueur du cordon 4a sous la gueule de manière à passer en position de fermeture et à augmenter la tension du cordon 4a. Dans cette position, le chien ne peut plus ouvrir sa gueule et ne peut donc pas mordre.

Si le chien est en liberté, la boucle de muselière 4 est verrouillée dans sa position de fermeture en bloquant la barre 11 dans un des crochets 12 en fonction de l'amplitude souhaitée de l'ouverture de la gueule.

Si le chien est maintenu en laisse, et en cas de danger pour autrui, il suffit soit de tirer sur la barre 11 pour mettre les extrémités 10 du cordon 4a en tension selon la flèche F, soit de tirer sur la laisse reliée directement aux extrémités 10 du cordon 4a. De ce fait, la longueur du cordon 4a sous le menton diminue et la boucle de muselière 4 passe en position de fermeture pour bloquer l'ouverture de la gueule du chien.

Dans un but esthétique ou humoristique, on peut disposer sur l'armature 2 un élément de décoration 20 en plaçant l'orifice 22 dans le crochet 16 et le fermoir 23 dans la boucle 17.

La description ci-dessus montre clairement que la muselière selon l'invention permet d'assurer à la fois le confort de l'animal et la sécurité de la population.

La présente invention n'est pas limitée à l'exemple de réalisation décrit mais s'étend à toute modification et variante évidentes pour un homme du métier tout en restant dans l'étendue de la protection définie dans les revendications annexées

## Revendications

1. Muselière (1) destinée notamment à un chien (5), **caractérisée en ce qu'**elle comprend une armature (2) agencée pour épouser la morphologie de la tête du chien (5), des moyens de maintien (3, 3a, 3b) passant au moins autour du cou du chien (5) et agencés pour maintenir l'armature (2) en position, et une boucle de muselière (4) à tension variable et agencée de manière à être réglée dans une position comprise entre une position de fermeture de la gueule du chien (5) en cas de danger de morsure ou d'aboiement excessif et une position d'ouverture permettant au chien (5) de s'alimenter, de boire et de haleter librement.

2. Muselière selon la revendication 1, **caractérisée en ce que** l'armature (2) comprend deux tubes creux présentant une partie (2a) solidaire l'une à l'autre puis une partie divergente (2b), de sorte que l'armature (2) présente une forme de Y avec une tige et deux branches, chaque partie divergente (2b) du tube correspondant aux branches du Y étant disposée de part et d'autre du museau du chien (5).

3. Muselière selon la revendication 2, **caractérisée en ce que** les moyens de maintien de l'armature comprennent une sangle (3) fixée à l'extrémité libre des parties solidaires (2a) de l'armature (2) en Y et agencée pour passer au moins autour du cou du chien (5).

4. Muselière selon les revendications 2 et 3, **caractérisée en ce que** les moyens de maintien de l'armature comprennent deux liens latéraux (3a, 3b) dont une extrémité est fixée à la sangle (3) sous la gueule du chien, l'autre extrémité desdits liens latéraux (3a, 3b) étant fixée à chaque extrémité libre des parties divergentes (2b) de l'armature (2) en Y.

5. Muselière selon la revendication 4, **caractérisée en ce que** la sangle (3) et les liens latéraux (3a, 3b) sont réalisés d'une seule pièce et réunis par un anneau de liaison (9).

6. Muselière selon la revendication 4, **caractérisée en ce que** la sangle (3) et les liens latéraux (3a, 3b) comportent des moyens de fixation (6, 7a, 7b, 8a, 8b) sur l'armature (2) agencés pour permettre un réglage en longueur de ladite sangle (3) et desdits liens (3a, 3b).

7. Muselière selon la revendication 2, **caractérisé en ce que** la boucle de muselière (4) comprend un cordon (4a) enserrant la gueule du chien (5) et dont chaque extrémité (10) passe dans chaque partie divergente (2b) de l'armature (2) pour ressortir par l'extrémité libre de chaque partie solidaire (2a) de ladite armature (2).

8. Muselière selon la revendication 7, **caractérisée en ce que** les extrémités (10) du cordon (4a) comportent des moyens de verrouillage (11, 12) en position de fermeture variable agencés pour permettre un réglage variable de ladite tension de ladite boucle de muselière (4).

9. Muselière selon la revendication 7, **caractérisée en ce que** les extrémités (10) du cordon (4a) comportent des moyens d'accrochage agencés pour être couplés à une laisse.

10. Muselière selon les revendications 5 et 7, **caractérisée en ce que** le cordon (4a) comprend un moyen de fixation rapide (14) à l'anneau de liaison (9) de la sangle (3).

11. Muselière selon la revendication 1, **caractérisée en ce que** l'armature (2) présente des moyens (16, 17) d'accrochage rapide et amovible d'un élément de décoration (20).
